# EUROPEAN PATENT APPLICATION

(11) **EP 4 715 247 A1**
(43) Date of publication of application: **25.03.2026**
(21) Application number: 24201153.4
(22) Date of filing: 18.09.2024
(51) Int. Cl.: F16L 5/04, H02G 3/22

(54) **WALL LEAD-THROUGH ELEMENT FOR THE INSTALLATION OF CABLES AND PIPES**

(71) Applicant: Hilti Aktiengesellschaft, 9494 Schaan (LI)
(72) Inventor: Zemler, Matthew, Corinth, 76210 (US); Fischer Herrera, Theresa, 86916 Kaufering (DE); Simon, Sebastian, 86807 Buchloe Lindenberg (DE); Förg, Christian, 86807 Buchloe (DE)
(74) Representative: Hilti Aktiengesellschaft Corporate Intellectual Property

(57) **Abstract**

The invention relates to a lead-through element for the installation of penetrants (10) through a wall (100) or ceiling of a building, comprising a hollow cylindrical sleeve section (1) extending at least partially over the wall thickness, wherein a stop ring (2) extending radially outwards is formed on a front end face of the sleeve section (1), and in that a plurality of fixing units (3) are arranged along the circumference of the sleeve section (1), wherein the plurality of fixing units (3) extend radially outwards and in the direction of the front end face in order to form retaining claws acting in a force-locking and positive-locking manner with respect to a wall or ceiling opening.

## Description

The present invention relates to a wall lead-through element for installing penetrants, preferably non-fire conducting lines and pipes, through a wall or ceiling or a floor of a building, in particular a wooden building or a concrete or drywall building, comprising a hollow cylindrical sleeve section which extends at least partially over the wall thickness or ceiling thickness.

The field of application of the invention extends primarily to the installation technology of buildings, in particular those of timber construction. In order to install technical building equipment, such as a heating system, a power supply network or a communication network, within a building, connecting electrical and/or fluid-carrying lines or pipes often have to be fed through openings in the walls, floors or ceilings of the building.

In contrast to this, however, the solution according to the invention is not suitable for fire-conducting lines or pipes, such as flue gas pipes of fireplaces. Relevant fire protection regulations apply here, which require special, standardized wall lead-through elements made of special non-combustible materials, usually with multiple interconnections.

### State of the art

The document DE 24 11 538 A1 describes a wall lead-through arrangement for cables, pipes and the like, which is installed in conjunction with a formwork for concrete casting. After removal of the formwork and removal of flanges connecting both sides, a thin-walled tube remains in the concrete wall as a hollow cylindrical sleeve section for the passage of cables, for example.

Particularly in buildings with a timber construction or timber stud construction, it is not possible to create such a material bond by moulding around the wall material. In addition, the penetration of liquids, such as tap water or waste water, into intermediate wall areas must also be avoided, in particular to prevent rotting of the wood-based material.

For the applications according to the invention, wall guide elements are generally known which are designed as hollow cylindrical sleeves which are inserted into prefabricated wall openings and usually glued into them. These sleeves can be made of a plastic material or a metal sheet and are usually cut to length according to the wall thickness. This requires a total of several individual assembly steps, which together take up a correspondingly long assembly time. In addition, it is often not possible to achieve a sealed, homogeneous transition between the wall area and the passage area.

It is therefore an object of the present invention to create a wall lead-through element for the installation of cables and pipes through, in particular, a wooden wall or ceiling of a building, which can be installed quickly and easily while ensuring secure separation.

### Disclosure of the invention

The problem is solved on the basis of a wall lead-through element according to the preamble of claim 1 in conjunction with its characterizing features. The following dependent claims describe advantageous further embodiments of the invention.

The invention includes the technical teaching that a stop ring extending radially outwards is molded onto a front end face of a hollow cylindrical sleeve section of a wall lead-through element, and that a plurality of fixing units, preferably metallic or plastic spring tongues, are arranged along the circumference of the sleeve section, which extend radially outwards and also in the direction of the front end face in order to form force-locking and positive-locking retaining claws with respect to a wall opening.

Due to in particular to the stop ring, the solution according to the invention ensures a homogeneous transition between a visible wall area and an opening for the passage of, for example, electrical or fluid lines and/or pipes. The stop ring also limits the insertion depth of the wall lead-through element, thereby ensuring correct installation. The fixing units ensure unhindered insertion of a wall lead-through element according to the invention into a wall opening. However, the alignment of the fixing units prevents the wall lead-through element from being pulled out. This is ensured by the fixing units engaging in the material of the wall opening, preferably wood, in the direction of extraction.

The lead-through element can be used in timber applications for walls, floors or ceilings. Further, the lead-through element can also be used in concrete and drywall applications.

It is an advantage of the lead-through element according to the application that it can be used for different wall/floor/ceiling thicknesses. Further, it is easily possible to modify the length of the lead-through element with respect to a certain application with a certain wall, floor or ceiling thickness.

According to a further aspect improving the invention, it is proposed that an insert means is arranged on an inner side of the sleeve section. In an assembled state, the inlay is arranged between its inner wall and cables and/or pipes passing through it, to form a fire barrier which closes the gap. This prevents fire, smoke or other damaging influences from passing through the wall lead-through element into neighboring rooms of a building. In addition, the filling of these intermediate spaces improves acoustic insulation. Such inserts can be, for example, elastomer elements which can be made of rubber or plastic or an intumescent, e.g. an intumescent strip or intumescent inlay, that swells under heat, which is inserted into an annular recess in the inner wall of the sleeve section and expands radially under heat. Preferably, the insert is arranged in a circumferential recess on the inner side of the sleeve section. It is possible that several insert means are provided or one single circumferential arranged insert means is provided.

In a preferred embodiment the fixing units are configured as spring tongues, which can be made of metallic or plastic. Alternatively, the fixing unites can be designed as pointed rods or the like.

In a preferred embodiment the fixing units are arranged in the region of a rear end face of the sleeve section opposite of the front end face.

According to a preferred embodiment, the fixing units, preferably spring tongues, are V-shaped and molded or inserted into the wall of the sleeve section with one of the two legs. For example, prefabricated pocket-shaped recesses can be prepared in the wall of the sleeve section for insertion. It is important to ensure that the spring tongues are firmly connected to the wall lead-through element in order to fulfil their functionality.

Alternatively, the spring tongues can also be part of a closed sheet metal ring made of spring steel, which is arranged on the sleeve section in the area of the rear end face and is attached to it. Fastening can be achieved by means of a clip connection, for example.

According to a preferred embodiment the fixing units are part of a closed sheet metal ring which is attached to the sleeve section. The ring could be arranged in the region of the rear end but could also be arranged closer to the front end, e. g. in the middle of the lead-through element.

According to a further measure that improves the invention, it is proposed that the rear end face of the sleeve section is provided with an additional smoke seal especially for sealing between a pipe and an interior of the sleeve section in an assembled state. This can be realized, for example, by a membrane-like cover or an elastomer element. Alternatively, the smoke seal could also be located on the front face.

According to a preferred embodiment which allows the lead-through element to be easily post-installed the sleeve section is made of at least two parts separating the sleeve section in the longitudinal direction. It is possible that the parts build half shells. The parts of the sleeve section can be combined with or without connection elements. In this case it is easily possible to modify the length of the lead-through element to cope with a certain wall, floor or ceiling thickness.

### Detailed description of the drawing

Further measures improving the invention are described in more detail below together with the description of a preferred embodiment of the invention with reference to the figures. It shows:
Fig. 1 is a perspective view of a wall lead-through element according to the invention,
Fig. 2 is a side view of the wall lead-through element as shown in Fig. 1,
Fig. 3 is a bottom view of the wall lead-through element as shown in Fig. 1 and Fig. 2,
Fig. 4 a perspective view of the wall lead-through element according to Fig. 1 to Fig. 3 in the assembled state.
Fig. 5 is a perspective view of an alternative version of a lead-through element made of two parts.

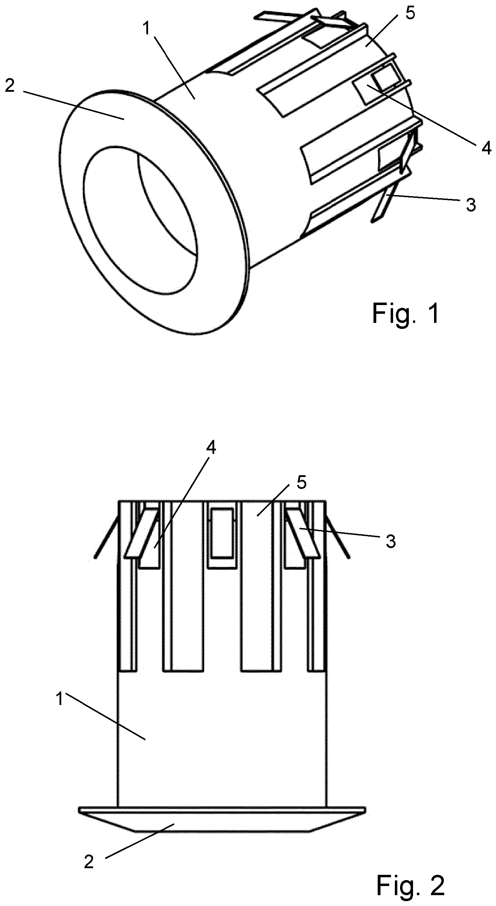

According to Fig. 1 to Fig. 3, a lead-through element, configured as a wall lead-trough element, essentially consists of a hollow cylindrical sleeve section 1, on the front end of which a stop ring 2 extending radially outwards is molded.

In another application the lead-through element can be used to lead-through a floor or a ceiling.

The sleeve section 1 with stop ring 2 is manufactured as a one-piece component by injection molding from a plastic material. In the area of the opposite rear end face, several fixing units, here metal spring tongues 3 arranged equidistantly to one another are fixed along the circumference of the sleeve section 1 in corresponding retaining pockets 4 within the wall of the sleeve section 1. Each metal spring tongue 3 extends with the free leg radially outwards and towards the front end of the sleeve section 1 to form retaining claws. Alternatively, the fixing units can be made integrally with the sleeve section 1.

On the outside of the sleeve section 1, a wreath of recesses 5 is molded into the wall of the sleeve section 1 between adjacent spring tongues 3. Furthermore, the rear end face of the sleeve section 1 is provided with a flat smoke seal 6, the position of which is only illustrated here.

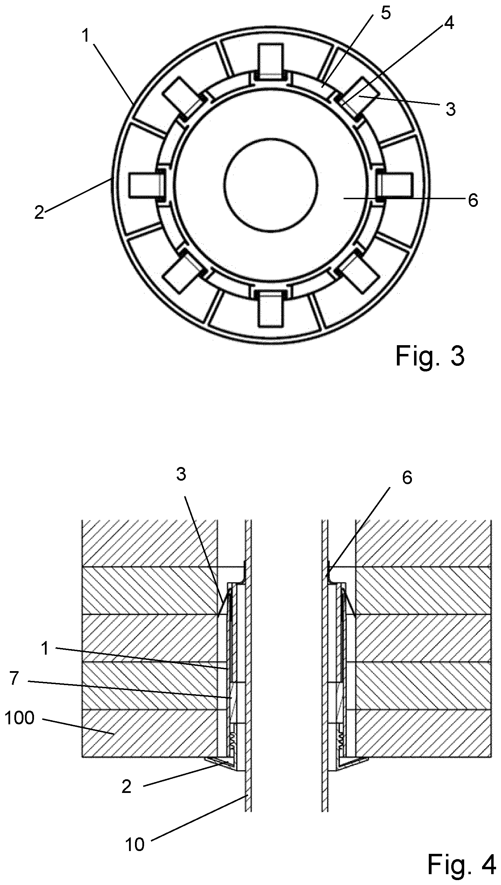

According to Fig. 4, the wall lead-through element is mounted in a combustible wooden wall 100. A single media-conducting pipe 10 runs through the wall 100 and the interior of the lead-through element in a longitudinal direction. The sleeve section 1 is arranged to the wall 100 with the stop ring 2 adjacent to one side of the wall 100 or floor. The spring tongues 3 are deflected and engaged on the inside of the cavity in the wall or floor. The smoke seals 6 or gasket stretches and contours around the pipe 10 once the pipe 10 is inserted into the lead-through element. The smoke seal 6 hereby seals between the pipe 10 and the interior of the sleeve section 1.

Inside of the sleeve section 1 an insert means 7 is arranged in a circumferential pocket or recess. The insert means 7 is designed as an intumescent inlay.

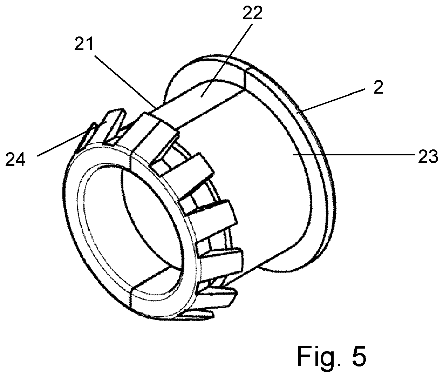

Fig. 5 shows another sleeve section 21 which is similar to the sleeve section 1 but made of two parts or halves 22, 23. The halves 22, 23 are separated in the longitudinal direction and allows the lead-through in difference to the sleeve section 1 also to be applied post-installed.

In the design shown in Fig. 5 the halves 22, 23 do not comprise any elements to connect the halves 22, 23 to each other. In another embodiment connection elements can be provided. In difference to the sleeve section 1, tongues 24 are formed integrally with the sleeve section 21. Especially for this application it is of advantage, that the design of the sleeve section 21 can easily be adapted to a certain wall, floor or ceiling thickness.

The invention is not limited to the preferred embodiment example described above. Rather, variations thereof are also conceivable, which are also covered by the scope of protection of the following claims. For example, it is also possible that the rear end face of the sleeve section is provided with a further stop ring corresponding to the stop ring 2, which is inserted therein as an additional component. It should also be noted that the spring tongues 3 do not have to be prefabricated as individual parts. Alternatively, the spring tongues can also be part of a one-piece sheet metal ring, preferably made of spring steel, which is attached to the outside of the sleeve section in order to fulfil the functional task of the spring tongues.

### List of reference symbols

- 1: Sleeve section
- 2: Stop ring
- 3: Spring tongue
- 4: Holding pocket
- 5: Recess
- 6: Smoke seal
- 7: Inserts
- 10: Pipe/pipe
- 21: Sleeve section
- 22: Part
- 23: Part
- 24: Tongues
- 100: Wall

## Claims

1. Lead-through element for the installation of penetrants (10) through a wall (100) or ceiling of a building, comprising a hollow cylindrical sleeve section (1) extending at least partially over the wall thickness,
**characterized in that** a stop ring (2) extending radially outwards is formed on a front end face of the sleeve section (1; 21), and **in that** a plurality of fixing units (3; 24) are arranged along the circumference of the sleeve section (1; 21), wherein the plurality of fixing units (3; 24) extend radially outwards and in the direction of the front end face in order to form retaining claws acting in a force-locking and positive-locking manner with respect to a wall or ceiling opening.

2. Lead-through element according to claim 1,
**characterized in that** the fixing units (3; 24) are configured as spring tongues or pointed rods.

3. Lead-through element according to claim 1 or 2,
**characterized in that** the fixing units (3) are arranged in the region of a rear end face of the sleeve section (1; 21) opposite of the front end face.

4. Lead-through element according to one of the preceding claims,
**characterized in that** an insert means (7) is arranged on an inner side of the sleeve section (1; 21).

5. Lead-through element according to claim one of the preceding claims,
**characterized in that** the fixing units (3; 24) are V-shaped and are cast or inserted with one of the two limbs into corresponding retaining pockets (4) of the sleeve section (1).

6. Lead-through element according to one of the preceding claims,
**characterised in that** the fixing units (3; 24) are part of a closed sheet metal ring which is attached to the sleeve section (1).

7. Lead-through element according to one of the preceding claims,
**characterized in that** the rear end face of the sleeve section (1; 24) is provided with a smoke seal (6).

8. Lead-through element according to one of the preceding claims,
**characterized in that** the sleeve section (1) is formed with the stop ring (2) as a one-piece component made of a plastic material.

9. Lead-through element according to one of the preceding claims,
**characterized in that** the sleeve section (24) is made of at least two parts (22, 23) separating the sleeve section (24) in the longitudinal direction.
